# EUROPEAN PATENT SPECIFICATION

(11) **EP 3 225 556 B1**
(45) Date of publication and mention of the grant of the patent: **11.04.2018**
(21) Application number: 17157423.9
(22) Date of filing: 22.02.2017
(51) Int. Cl.: B64F 1/00, B64F 1/26, E01F 3/00

(54) **ACTIVE PLATFORM FOR THE LANDING OF AN AIRCRAFT ON A FLOATING UNIT**
PLATTFORM FÜR DIE LANDUNG EINES FLUGZEUGS AUF EINER SCHWIMMENDE EINHEIT
PLATE-FORME ACTIVE POUR L'ATTERRISSAGE D'UN AÉRONEF SUR UNE UNITÉ FLOTTANTE

(30) Priority: 29.03.2016 IT UA20162090
(43) Date of publication of application: 04.10.2017
(73) Proprietor: B. FINANCIAL S.r.l., 24067 Sarnico (BG) (IT)
(72) Inventor: BESENZONI, Giovanni, 24067 Sarnico (BG) (IT)
(74) Representative: Burchielli, Riccardo

(56) References cited:
- CN-U- 203 487 472
- CN-U- 204 871 627
- US-A1- 2010 038 480

## Description

The present invention relates to a support platform for aircraft installable on a floating unit.

In particular, it relates to a landing and take-off platform for helicopters, installed on a ship and especially on a yacht.

Nowadays landing / take-off platforms for helicopters installed on ships are known.

A well-known model of such platform presents an extensible fencing that is configured to extend from a rest configuration to an operating configuration.

In the rest configuration, the fencing does not stick out beyond the plane of the platform, so as not to interfere with an aircraft in take-off / landing on the latter.

Instead, in the operating configuration it protrudes on the plane of the platform to delimit it, so as to provide an indication to users and counter the fall of the latter from the platform, especially in the case of sensitive pitching and / or rolling of the ship.

This type of platform, in more detail is equipped with a plurality of hydraulic actuators acting on a cross-member adapted to construct the upper border of the fencing (see e.g. document US2010/0038480). These actuators are arranged so as to extend along mutually parallel directions.

The problem underlying the present invention is to propose an alternative structure to the platform with movable fencing described above.

Main aim of the present invention is to achieve a support platform for aircraft installable on a ship that gives solution to such problem.

Within the ambit of such aim, it is an object of the present invention to propose a support platform for aircraft installable on a ship which is more compact compared with known platforms.

Another object of the present invention is to provide a support platform for aircraft installable on a ship that allows to obtain a greater safety of users.

Still another object of the invention consists in proposing a support platform for aircraft installable on a ship which is structurally simple and easy installation and maintenance.

This aim, these objects and others which will become apparent hereinafter are achieved by a support platform for aircraft installable on a ship according to claim 1 attached.

Detailed characteristics of the support platform for aircraft installable on a ship according to the invention are reported in the corresponding dependent claims.

Further characteristics and advantages of the invention will become apparent from the description of a preferred embodiment, but not exclusive of aircraft support platform installable on a ship according to the present invention, illustrated only by way of non-limitative example in the accompanying drawings, in which:

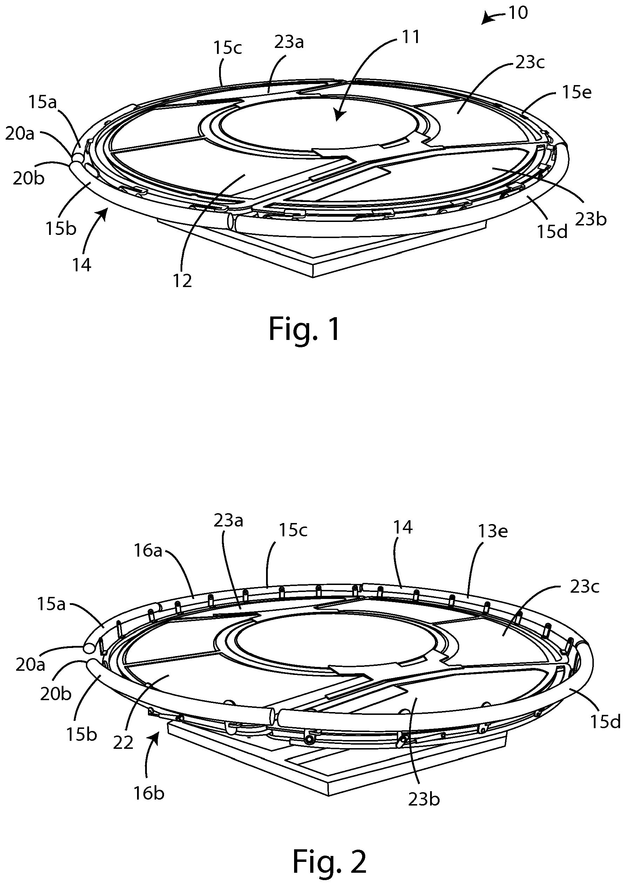

- Figure 1 illustrates a support platform for aircraft installable on a ship, according to the present invention, with fencing lowered in perspective view;
- Figure 2 illustrates the platform of Figure 1, with the fencing raised;

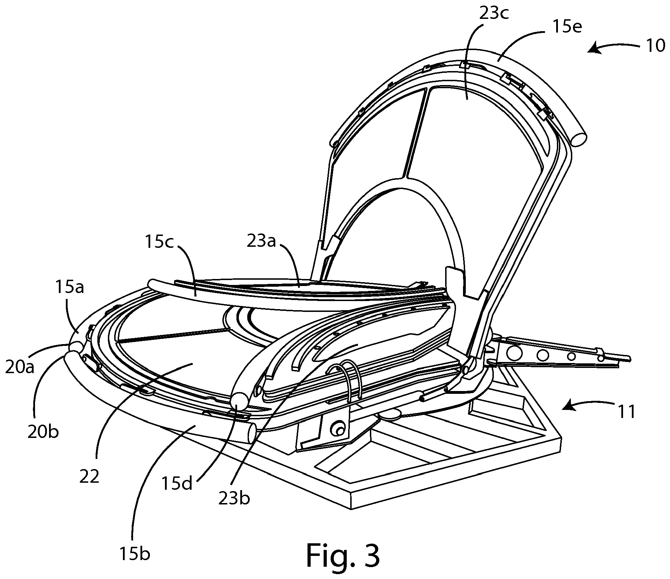

- Figure 3 illustrates the platform of Figures 1 and 2, partially folded
- Figures 4a, 4b and 4c illustrate a detail of the platform of Figures 1-3 where some parts have been removed to better illustrate others, arranged according to three configurations;

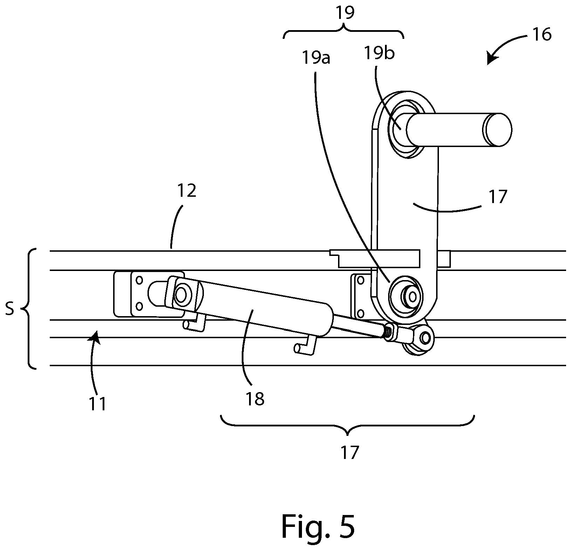

- Figure 5 illustrates a particular of the platform of Figures 1-3 where some parts have been removed for better underlining others.

With particular reference to the above figures cited, generally indicated with reference numeral 10 a support platform for aircraft installable on a ship, comprising a circular body 11 having a planar face 12 defining a resting plane for an aircraft.

In accordance with the present invention, the platform 10 has a particular characteristic in that it comprises a movable fence 13 which comprises:
- a beam 14 which extends along a concentric circular path with respect to the body 11, the beam 14 is composed of at least two segments 15a, 15b, 15c, 15d, 15e;
- means for moving 16 connected to the body 11 and the beam 14 to move the segments 15a, 15b, 15c, 15d, 15e, of the beam 14 between an operating configuration and a rest configuration, along a helical trajectory and coaxial to the body 11 so that during the transition between the two configurations, the segments perform a movement given by the composition of a translation along a vertical direction and a rotation about the axis of the body 11, i.e. along a circumferential direction of the axis of the body 11.

In the operating configuration, the segments 15a, 15b, 15c, 15d, 15e protrude above the rest surface of the body 11 so as to circumferentially delimit a seat for the aircraft.

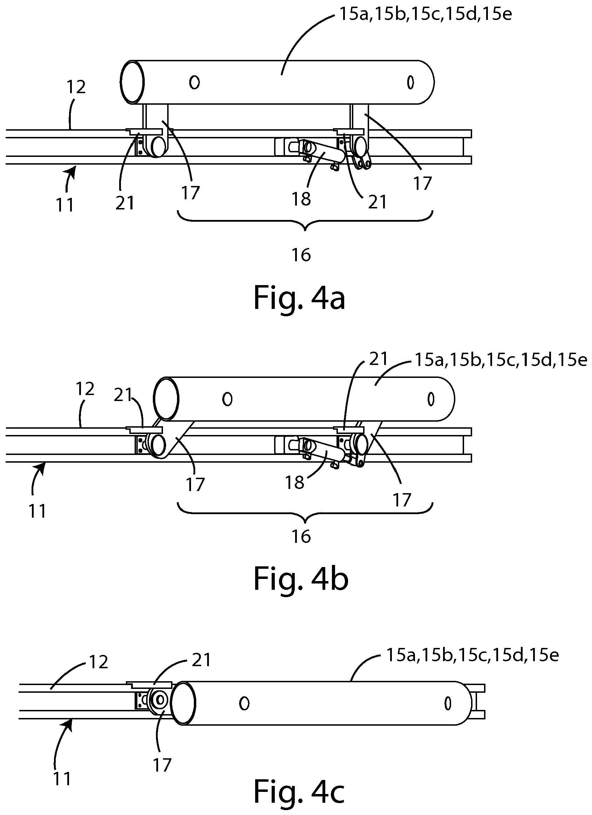

By way of an example, Figure 4a illustrates the operating configuration, in Figure 4c the rest configuration and in figure 4b an intermediate configuration, which is assumed during the transit between the operating configuration and the rest configuration and vice versa.

In the rest configuration, the segments 15a, 15b, 15c, 15d, 15e are positioned below the rest surface in such a way as not to interfere with an aircraft in take-off or landing from / on the body 11.

Preferably, when they are in operating configuration, the segments 15a, 15b, 15c, 15d, 15e are substantially parallel to when they are in the rest configuration.

Furthermore, in a preferred embodiment, but not exclusive of the present invention, also exemplified in the attached figures, the body 11 has a thickness S which is substantially equal to the vertical dimension of the beam 14, and, when it is in the rest configuration, segments 15a, 15b, 15c, 15d, 15e are arranged in such a way not to protrude beyond the extension of the thickness of the body 11.

The means for moving 16 advantageously comprise, for each segment 15a, 15b, 15c, 15d, 15e of the beam 14:
- at least two connecting-rod elements 17, connected to the body 11 and to the respective segment 15a, 15b, 15c, 15d, 15e in order to drive in motion between said configurations, along said helical path;
- at least one actuator 18, preferably hydraulic and advantageously dual-effect, connected to the body 11 and at least one of the connecting-rod elements 17 to operate it in motion.

Preferably, the means for moving 16 comprise spheroid joints 19 through which the connecting-rod elements 17 are directly connected to the body 11 and the segment 15a, 15b, 15c, 15d, 15e, respectively. Advantageously, the platform 10, for each connecting-rod element 17 comprises a locking element 21 adapted to restrain the corresponding connecting-rod element 17 when the beam is in operating configuration.

The connecting rod elements 17 advantageously consist of flat rods and the locking elements consist of brackets fastened to the edge of the body 11 and equipped with a slot that can be engaged by the respective connecting rod element 17.

In greater detail, with particular reference to Figure 4, each connecting-rod element 17 is connected via a first spheroid joint, indicated in Figure 4 by the reference number 19a at the lateral edge of the body 11.

Advantageously, each actuator 18 has one end fixed to the same lateral edge of the body 11 and the other end secured to the connecting rod 17 to operate it in motion in an articulated manner with respect to the first spheroid joint 19a.

One end of the connecting rod 17 is connected, by means of a second spheroid joint, indicated in Figure 4 with the reference 19b, to a side of the beam 14.

The segments 15a, 15b, 15c, 15d, 15e comprise a first segment 15a having a first extreme 20a facing, along a circumferential direction to the body 11, to a second extreme 20b of a second 15b of the segments 15a, 15b, 15c, 15d, 15e.

The means for moving 16 are advantageously configured in such a way that, in the rest configuration, the extremes 20a, 20b are at a first mutual distance, and in the operating configuration they are at a second mutual distance which is greater than the first distance and preferably such as to allow the passage of at least one person between the ends 20a, 20b.

In other words, the extremes 20a and 20b, in the operating configuration, advantageously are placed in such a way as to identify a passage gap through which users can descend from the platform 10.

The means for moving 16 advantageously comprise:
- first means for moving 16a are adapted to actuate the first segment 15a and
- second means for moving 16b are adapted to actuate the second segment 15b.

The first and second means for moving 16a and 16b are advantageously configured in such a way as to drive the first segment 15a and the second segment 15b respectively along a first and a second helical path coaxial to the body 11, wherein the first and the second helical path have opposite propeller ways, in such a way that, when in use, by the passage from rest configuration to the operating configuration is actuated, then the extremes 20a, 20b mutually move away from each other and, vice-versa, they approach each other when the transition from the operating configuration to the rest configuration is actuated.

The platform 10 is advantageously foldable.

In this sense, the body 11 preferably comprises a principal element 22 and at least one secondary element 23a, 23b, 23c which is articulated to the principal element 22 in a foldable way on the principal element 22.

In this case, the beam 14, in general, preferably comprises:
- a first 15a and a second segment 15b connected to the principal element 22;
- at least a third segment 15c, 15d, 15e connected to the at least one secondary element 23a, 23b, 23c.

In particular, with reference to the embodiment of non-limiting example shown in the attached figures, the body 11 comprises a first 23a, a second 23b and a third secondary element 23c configured in such a way that the first and second secondary elements 23a, 23b are articulated to the principal element 22 in a way foldable on the latter and that the third secondary element 23c is articulated to the principal element 22 so as to be folded on the latter to at least partially cover the first and second secondary elements 23a, 23b, when in use are folded on the principal element 22.

The beam 14 comprises the first 15a and the second segment 15b connected to the principal element 22 and three additional segments 15c, 15d, 15e each connected to a corresponding one of secondary elements 23a, 23b, 23c.

It has therefore been noted how a platform according to the present invention achieves the intended aim and objects of proposing a simple and efficient platforms known that allows greater security of users while being particularly compact.

The invention thus conceived is susceptible to numerous modifications and variations, all falling within the protective scope of the appended claims.

Moreover, all the details may furthermore be replaced with other technically equivalent elements.

In practice, the materials employed, as well as the contingent shapes and dimensions, may be varied depending on the contingent need and state of the art.

Where the constructive features and the techniques mentioned in the following claims are followed by reference numbers or signs, such signs and reference numbers have been applied with the sole purpose of increasing the intelligibility of the claims and consequently, they do not constitute in any way limiting the interpretation of each element identified, purely by way of example, from such signs or reference numbers.

## Claims

1. Support platform for an aircraft installable on a floating unit, comprising a circular body (11) having a planar face (12) defining a rest surface for an aircraft, **characterized by** comprising a movable fencing (13) comprising:
- a beam (14) extending along a circular path concentric with respect to said body (11), said beam (14) is composed of at least two segments (15a, 15b, 15c, 15d, 15e);
- means for moving (16) connected to said body (11) and to said beam (14) for moving said segments (15a, 15b, 15c, 15d, 15e), between an operating configuration and a rest configuration, along an helical trajectory and coaxial to said circular body (11);
in said operating configuration said segments (15a, 15b, 15c, 15d, 15e) being projecting above said rest surface so as to circumferentially delimit a seat for the aircraft;
in said rest configuration, said segments (15a, 15b, 15c, 15d, 15e) being positioned below to said rest plane so as not to interfere with an aircraft in take-off or landing.

2. Platform according to claim 1, **characterized in that**, when they are in said operating configuration, said segments (15a, 15b, 15c, 15d, 15e) are substantially parallel to when they are in said rest configuration.

3. Platform according to one of the preceding claims **characterized in that** said means for moving (16) comprise, for each segment (15a, 15b, 15c, 15d, 15e) of said beam (14):
- at least two connecting rod elements (17) which are connected to said body (11) and said segment (15a, 15b, 15c, 15d, 15e) in order to drive in movement between said configurations, along said helical path;
- at least one actuator (18) connected to said body (11) and at least one of said connecting rod elements (17) to operate it in motion.

4. Platform according to claim 3 **characterized in that** said means for moving (16) comprise spheroid joints (19) through which said connecting rod elements (17) are directly connected to said body (11) and said segment (15a, 15b, 15c, 15d, 15e), respectively.

5. Platform according to one of the preceding claims **characterized in that** said segments (15a, 15b, 15c, 15d, 15e) comprise a first segment (15a) having a first extreme (20a) facing, along a circumferential direction to said body (11), to a second extreme (20b) of a second of said segment (15a, 15b, 15c, 15d, 15e); said means for moving (16) being configured in such a way that in said rest configuration said extremes(20a, 20b) have a first distance and in said operating configuration they have a second distance greater than said first distance and such as to allow the passage of at least one person between said extremes (20a, 20b).

6. Platform according to claim 5 **characterized in that** said means for moving (16) comprise first means for moving (16) adapted to operate said first segment (15a) and second means for moving (16) adapted to operate said second segment (15b); said first and second actuating means being configured in such a way as to drive said first segment (15a) and said second segment (15b) respectively along a first and a second helical trajectory coaxial to said body (11), where said first and said second helical path have opposite propeller ways, in such a way that, when in use, the passage from said rest configuration to said operating configuration is operated, said extremes (20a, 20b) mutually move away from each other and, vice-versa, they approach each other when the passage from said operating configuration to said rest configuration is actuated.

7. Platform according to claim 5 **characterized in that** said body (11) comprises a principal element (22) and at least one secondary element (23a, 23b, 23c) which is articulated to said principal element (22) foldable over said principal element (22); said beam (14) comprising:
- a first (15a) and a second segment (15b) connected to said principal element (22);
- at least a third segment (15c, 15d, 15e) connected to said at least one secondary element (23a, 23b, 23c).

8. Platform according to claims 6 and 7, **characterized in that** said body (11) comprises a first, a second and a third of said secondary element (23a, 23b, 23c) are configured in such a way that said first and second secondary element (23a, 23b) are articulated to said principal element (22) so as to be folded on the latter and that said third secondary element (23c) is articulated to said principal element (22) so as to fold on the latter to cover at least partially said first and second secondary element (23a, 23b) when in use these are folded on said principal element (22); said beam (14) comprising said first and second segment (15a, 15b) connected to said principal element (22) and three further segments (15c, 15d, 15e) each connected to a corresponding one of said secondary elements (23a, 23b, 23c).

## Patentansprüche

1. Tragplattform für ein Flugzeug, die auf einer schwimmenden Einheit installiert werden kann, umfassend einen kreisförmigen Körper (11), der eine ebene Fläche (12) besitzt, die eine Abstellfläche für ein Flugzeug definiert, **dadurch gekennzeichnet, dass** sie eine bewegliche Umzäunung (13) umfasst, umfassend:
- einen Holm (14), der sich entlang eines kreisförmigen Pfades konzentrisch in Bezug auf den Körper (11) erstreckt, wobei der Holm (14) aus mindestens zwei Segmenten (15a, 15b, 15c, 15d, 15e) besteht;
- Mittel zum Bewegen (16), die mit dem Körper (11) und mit dem Holm (14) verbunden sind, zum Bewegen der Segmente (15a, 15b, 15c, 15d, 15e) zwischen einer Betriebskonfiguration und einer Abstellkonfiguration, entlang einer schraubenförmigen Bahn und koaxial zu dem kreisförmigen Körper (11);
wobei in der Betriebskonfiguration die Segmente (15a, 15b, 15c, 15d, 15e) über die Abstellfläche hinaus überragen, sodass sie umfangsseitig einen Stellplatz für das Flugzeug begrenzen;
wobei in der Abstellkonfiguration die Segmente (15a, 15b, 15c, 15d, 15e) unterhalb der Abstellebene positioniert sind, sodass sie ein Flugzeug beim Abheben oder Landen nicht behindern.

2. Plattform nach Anspruch 1, **dadurch gekennzeichnet, dass** wenn sie sich in der Betriebskonfiguration befinden, die Segmente (15a, 15b, 15c, 15d, 15e) im Wesentlichen parallel dazu sind, wenn sie sich in der Abstellkonfiguration befinden.

3. Plattform nach einem der vorstehenden Ansprüche, **dadurch gekennzeichnet, dass** die Mittel zum Bewegen (16) für jedes Segment (15a, 15b, 15c, 15d, 15e) des Holms (14) umfassen:
- mindestens zwei Verbindungsstangenelemente (17), die mit dem Körper (11) und dem Segment (15a, 15b, 15c, 15d, 15e) verbunden sind, um in Bewegung zwischen den Konfigurationen entlang des schraubenförmigen Pfades anzutreiben;
- mindestens einen Aktor (18), der mit dem Körper (11) und mindestens einem der Verbindungsstangenelemente (17) verbunden ist, um es in Bewegung zu betreiben.

4. Plattform nach Anspruch 3, **dadurch gekennzeichnet, dass** die Mittel zum Bewegen (16) Kugelgelenke (19) umfassen, über die die Verbindungsstangenelemente (17) jeweils direkt mit dem Körper (11) und dem Segment (15a, 15b, 15c, 15d, 15e) verbunden sind.

5. Plattform nach einem der vorstehenden Ansprüche, **dadurch gekennzeichnet, dass** die Segmente (15a, 15b, 15c, 15d, 15e) ein erstes Segment (15a) umfassen, das ein erstes Ende (20a) besitzt, das entlang einer Umfangsrichtung zum Körper (11) einem zweiten Ende (20b) eines zweiten der Segmente (15a, 15b, 15c, 15d, 15e) zugewandt ist; wobei die Mittel zum Bewegen (16) in einer derartigen Weise konfiguriert sind, dass die Enden (20a, 20b) in der Abstellkonfiguration einen ersten Abstand besitzen und sie in der Betriebskonfiguration einen zweiten Abstand besitzen, der größer als der erste Abstand und derart ist, dass er das Passieren von mindestens einer Person zwischen den Enden (20a, 20b) ermöglicht.

6. Plattform nach Anspruch 5, **dadurch gekennzeichnet, dass** die Mittel zum Bewegen (16) erste Mittel zum Bewegen (16) umfassen, die dazu geeignet sind, das erste Segment (15a) zu betreiben, und zweite Mittel zum Bewegen (16), die dazu geeignet sind, das zweite Segment (15b) zu betreiben; wobei das erste und zweite Betätigungsmittel in einer derartigen Weise konfiguriert sind, dass sie das erste Segment (15a) und das zweite Segment (15b) jeweils entlang einer ersten und einer zweiten schraubenförmigen Bahn koaxial zum Körper (11) antreiben, wobei der erste und der zweite schraubenförmige Pfad entgegengesetzte Propellerbahnen besitzen, in einer derartigen Weise, dass wenn im Gebrauch das Passieren aus der Abstellkonfiguration in die Betriebskonfiguration betrieben wird, die Enden (20a, 20b) sich gegenseitig voneinander weg bewegen, und umgekehrt sie sich einander nähern, wenn das Passieren aus der Betriebskonfiguration in die Abstellkonfiguration betätigt wird.

7. Plattform nach Anspruch 5, **dadurch gekennzeichnet, dass** der Körper (11) ein Hauptelement (22) und mindestens ein Sekundärelement (23a, 23b, 23c) umfasst, das über das Hauptelement (22) klappbar an dem Hauptelement (22) angelenkt ist; wobei der Holm (14) umfasst:
- ein erstes (15a) und ein zweites Segment (15b), die mit dem Hauptelement (22) verbunden sind;
- mindestens ein drittes Segment (15c, 15d, 15e), das mit dem mindestens einen Sekundärelement (23a, 23b, 23c) verbunden ist.

8. Plattform nach Ansprüchen 6 und 7, **dadurch gekennzeichnet, dass** der Körper (11) ein erstes, ein zweites und ein drittes des Sekundärelements (23a, 23b, 23c) umfasst, die in einer derartigen Weise konfiguriert sind, dass das erste und zweite Sekundärelement (23a, 23b) so an dem Hauptelement (22) angelenkt sind, dass sie auf das Letztere geklappt werden, und dass das dritte Sekundärelement (23c) so an dem Hauptelement (22) angelenkt ist, dass es auf das Letztere klappt, um das erste und zweite Sekundärelement (23a, 23b) mindestens teilweise zu bedecken, wenn diese im Gebrauch auf das Hauptelement (22) geklappt sind; wobei der Holm (14) das erste und zweite Segment (15a, 15b) umfasst, die mit dem Hauptelement (22) verbunden sind, und drei weitere Segmente (15c, 15d, 15e), die jedes mit einem entsprechenden aus den Sekundärelementen (23a, 23b, 23c) verbunden sind.

## Revendications

1. Plate-forme de support pour un aéronef, pouvant être installée sur une unité flottante, comprenant un corps circulaire (11) ayant une face plane (12) définissant une surface de repos pour un aéronef, **caractérisée en ce qu'**elle comprend une barrière mobile (13) comprenant :
- une poutrelle (14) s'étendant le long d'un chemin circulaire concentrique par rapport audit corps (11), ladite poutrelle (14) est composée d'au moins deux segments (15a, 15b, 15c, 15d, 15e) ;
- un moyen de déplacement (16) relié audit corps (11) et à ladite poutrelle (14) pour déplacer lesdits segments (15a, 15b, 15c, 15d, 15e), entre une configuration d'exploitation et une configuration de repos, le long d'une trajectoire hélicoïdale et coaxiale audit corps circulaire (11) ;
dans ladite configuration d'exploitation, lesdits segments (15a, 15b, 15c, 15d, 15e) dépassant au-dessus de ladite surface de repos afin de délimiter de manière circonférentielle une assise pour l'aéronef ;
dans ladite configuration de repos, lesdits segments (15a, 15b, 15c, 15d, 15e) étant positionnés au-dessous dudit plan de repos afin de ne pas interférer avec un aéronef lors du décollage ou de l'atterrissage.

2. Plate-forme selon la revendication 1, **caractérisée en ce que**, lorsqu'ils sont dans ladite configuration d'exploitation, lesdits segments (15a, 15b, 15c, 15d, 15e) sont sensiblement parallèles à ce qu'ils sont dans ladite configuration de repos.

3. Plate-forme selon l'une des revendications précédentes, **caractérisée en ce que** ledit moyen de déplacement (16) comprend, pour chaque segment (15a, 15b, 15c, 15d, 15e) de ladite poutrelle (14) :
- au moins deux éléments formant bielles (17) qui sont reliés audit corps (11) et audit segment (15a, 15b, 15c, 15d, 15e) pour entraîner un déplacement entre lesdites configurations, le long dudit chemin hélicoïdal ;
- au moins un dispositif d'actionnement (18) relié audit corps (11) et à au moins un desdits éléments formant bielles (17) pour le mettre en oeuvre en mouvement.

4. Plate-forme selon la revendication 3, **caractérisée en ce que** ledit moyen de déplacement (16) comprend des articulations sphéroïdes (19) par l'intermédiaire desquelles lesdits éléments formant bielles (17) sont directement respectivement reliés audit corps (11) et audit segment (15a, 15b, 15c, 15d, 15e).

5. Plate-forme selon l'une des revendications précédentes, **caractérisée en ce que** lesdits segments (15a, 15b, 15c, 15d, 15e) comprennent un premier segment (15a) ayant une première extrémité (20a) faisant face, le long d'une direction circonférentielle audit corps (11), à une seconde extrémité (20b) d'un deuxième dudit segment (15a, 15b, 15c, 15d, 15e) ; ledit moyen de déplacement (16) étant configuré d'une telle façon que dans ladite configuration de repos lesdites extrémités (20a, 20b) sont à une première distance et dans ladite configuration d'exploitation elles sont à une seconde distance plus grande que ladite première distance et de façon à permettre le passage d'au moins une personne entre lesdites extrémités (20a, 20b).

6. Plate-forme selon la revendication 5, **caractérisée en ce que** ledit moyen de déplacement (16) comprend un premier moyen de déplacement (16) conçu pour mettre en oeuvre ledit premier segment (15a) et un second moyen de déplacement (16) conçu pour mettre en oeuvre ledit deuxième segment (15b) ; lesdits premier et second moyens d'actionnement étant configurés de façon à entraîner ledit premier segment (15a) et ledit deuxième segment (15b) respectivement le long d'une première et d'une seconde trajectoire hélicoïdale coaxiale audit corps (11), où ledit premier et ledit second chemin hélicoïdal ont des voies en hélice opposées, d'une telle façon que, lors de l'utilisation, le passage de ladite configuration de repos à ladite configuration d'exploitation est mis en oeuvre, lesdites extrémités (20a, 20b) s'éloignent mutuellement l'une de l'autre et, vice versa, elles se rapprochent l'une de l'autre lorsque le passage de ladite configuration d'exploitation à ladite configuration de repos est mis en action.

7. Plate-forme selon la revendication 5, **caractérisée en ce que** ledit corps (11) comprend un élément principal (22) et au moins un élément secondaire (23a, 23b, 23c) qui est articulé audit élément principal (22) pliable sur ledit élément principal (22) ; ladite poutrelle (14) comprenant :
- un premier (15a) et un deuxième segment (15b) reliés audit élément principal (22) ;
- au moins un troisième segment (15c, 15d, 15e) relié audit au moins un élément secondaire (23a, 23b, 23c).

8. Plate-forme selon les revendications 6 et 7, **caractérisée en ce que** ledit corps (11) comprend un premier, un deuxième et un troisième dit élément secondaire (23a, 23b, 23c) qui sont configurés d'une telle façon que ledit premier et ledit deuxième élément secondaire (23a, 23b) sont articulés audit élément principal (22) afin d'être pliés sur ce dernier et que ledit troisième élément secondaire (23c) est articulé audit élément principal (22) afin de se plier sur ce dernier pour couvrir au moins partiellement ledit premier et ledit deuxième élément secondaire (23a, 23b) quand, lors de l'utilisation, ceux-ci sont pliés sur ledit élément principal (22) ; ladite poutrelle (14) comprenant ledit premier et ledit deuxième segment (15a, 15b) reliés audit élément principal (22) et trois segments supplémentaires (15c, 15d, 15e) reliés chacun à l'un correspondant desdits éléments secondaires (23a, 23b, 23c).
